**Europäisches Patentamt**

**European Patent Office**

**Office européen des brevets**

(19)

(11) Veröffentlichungsnummer : **0 370 035 B1**

(12)

# EUROPÄISCHE PATENTSCHRIFT

(45) Veröffentlichungstag der Patentschrift :
**15.01.92 Patentblatt 92/03**

(51) Int. Cl.$^5$ : **B22D 11/04**

(21) Anmeldenummer : **88905720.4**

(22) Anmeldetag : **21.07.88**

(86) Internationale Anmeldenummer :
**PCT/DE88/00459**

(87) Internationale Veröffentlichungsnummer :
**WO 89/00901 09.02.89 Gazette 89/04**

(54) VORRICHTUNG ZUR ERZEUGUNG EINER VERTIKALEN HUBBEWEGUNG BEI STRANGGIESSKOKILLEN.

(30) Priorität : **24.07.87 DE 3725032**

(43) Veröffentlichungstag der Anmeldung :
**30.05.90 Patentblatt 90/22**

(45) Bekanntmachung des Hinweises auf die Patenterteilung :
**15.01.92 Patentblatt 92/03**

(84) Benannte Vertragsstaaten :
**AT BE CH DE FR GB IT LI LU NL SE**

(56) Entgegenhaltungen :
**EP-A- 173 089**
**DE-A- 1 433 048**
**FR-A- 2 274 841**
**GB-A- 825 229**

(73) Patentinhaber : **MANNESMANN Aktiengesellschaft Mannesmannufer 2 W-4000 Düsseldorf 1 (DE)**

(72) Erfinder : **GROTHE, Klaus Eisenstädter Str. 7 W-4019 Monheim (DE)**

(74) Vertreter : **Presting, Hans-Joachim et al Herbertstrasse 22 W-1000 Berlin 33 (DE)**

EP 0 370 035 B1

Jouve, 18, rue Saint-Denis, 75001 PARIS

## Beschreibung

Die Erfindung betrifft eine Vorrichtung zur Erzeugung einer vertikalen Hubbewegung bei Stranggießkokillen für Metall, insbesondere Stahl, bestehend aus mindestens einem in seiner Hubhöhe verstellbare Schwingung erzeugenden mechanischen Antriebselement, das, sich auf einem Fundament aubstützend, mit einer Stranggießkokille in Verbindung steht.

An eine Oszillationsvorrichtung für Stranggießkokillen für Metall werden hohe Anforderungen an die Betriebssicherheit gestellt. Zu beachten ist dabei, daß Gießkokillen für Stahlstranggießanlagen Gewichte um 60 Tonnen aufweisen und in der extrem rauhen Atmosphäre im Eingießbereich der Stranggießanlage eingesetzt werden. Trotz dieser widrigen Verhältnisse werden gleichzeitig hohe Anforderungen an die Genauigkeit der Hubverstellung gestellt.

Mechanische Hubantriebe weisen in der Regel einen Exzenterantrieb auf.

Aus EP-A 01 73 089 ist eine mechanische Presse mit einer an einen Antrieb gekoppelten Welle bekannt, die mit einem Pleuel, dessen unteres Ende mit einem Stößel drehbar in Verbindung steht, der geführt und relativ zu einem Pressentisch bewegbar ist, versehen ist. Bei diesem bekannten Antrieb wird aus einer Drehbewegung der Antriebswelle ein nahezu im rechten Winkel dazu stehender Ausgangshub erzeugt. Hieraus ist kein Hinweis zu entnehmen für eine Vorrichtung zur Erzeugung einer vertikalen Hubbewegung bei Stranggießkokillen, bei der die Drehachse eines Drehtellers in gleicher Richtung angeordnet ist.

Aus der den Oberbegriff des Patentanspruch 1 bildenden DE-A 14 33 048 ist eine von Hebelgestängen gebildete Hubvorrichtung für Kokillen bekannt mit einem von einer angetriebenen Scheibe gebildeten Hubsteuerteil. Bei dieser bekannten Hubvorrichtung stehen zweiarmige Hebel im Kraftfluß mit der Kokille, die die Drehbewegung der Welle des scheibenförmigen Antriebs in eine um 90 Grad zur Wellenachse versetzte Vertikalhubrichtung der Kokille umwandeln. Diese Anordnung weist eine Reihe von mechanischen Bauteilen auf, die gleitend miteinander verbunden sind. Nachteil der bekannten Vorrichtung sind zum einen der hohe Verschleiß der Elemente und zum anderen Ungenauigkeit bei der Führung der Kokille durch die Vielzahl der eingesetzten Elemente, verstärkt noch durch die Übersetzung des eingesetzten zweiarmigen Hebels.

Aus der JP-Gbm. 44 888/74 ist eine Vorrichtung zum Oszillieren einer Kokille in einer Stranggießanlage bekannt, bei der die Exzenterwellen unterhalb der Kokille angeordnet sind. Diese Anordnung hat den Nachteil, das wesentliche verschleißgefährdete Teile direkt im Bereich der Kokille sich befinden. Dies gilt insbesondere für eine mögliche Hubhöhenverstellung.

Aus der AT-PS 333 997, ist ein Oszillationsgetriebe bekannt, insbesondere für Kokillen in Stranggießanlagen. Dieser Oszillationsantrieb ist Teil einer Stranggießanlage, bei denen die schwingend angetriebene Kokille an einem Ende eines Waagebalkens gelagert ist, an dessen anderen Ende ein Pleuelstange angelenkt ist, die mit dem Getriebe verbunden ist. Dieses Getriebe enthält ein Hubverstellgetriebe, das von einem Motor antreibbar ist. Die Verstellung der OszillationsampLitude wird dadurch erreicht, daß eine Kurbelzapfenachse mit der Getriebeachse bzw. mit der Achse des Antriebszahnrades relativ verändert wird. Beim Betrieb des Schwingantriebes kreist die Kurbelwelle um die Getriebeachse und, je nach der Winkelstellung des Kurbelzapfens kreist dieser ebenfalls um die Achse, wodurch sich variable Amplituden ergeben.

Diese Vorrichtung hat zum einen den Nachteil, daß der Exzenter nur in relativ großen Sprüngen verstellt werden kann. Diese Sprünge werden mit nur geringen Untersetzungen bis zur Oszillation der Kokille geleitet. Hinzu tritt, daß gerade bei diesen Anlagen mit Schwingarmen sich über die relativ große Anzahl der Elemente, insbesondere der Lagerstellen, Ungenauigkeiten bei der Einstellung der Hubhöhe ergeben. Eine Fehlerquelle ergibt sich durch die Veränderungen der Hebel des Waagebalkens und der Pleuelstange. Eine weitere Fehlerquelle ergibt sich aus dem System Welle/Lager. Dort insbesondere die Veränderung der Lochleibung durch Verschleiß.

Aus den Getriebeblättern AWF 633 T, Hubänderung während des Ganges betreffend, ist eine Hubänderung durch gegenseitiges Verdrehen eines Doppelexzenters mit Hilfe eines Schraubengetriebes bekannt (Beispiele in Bild 6 und 7). Aus dem gleichen Blatt ist unter Bild 1 eine Änderung der Exzentrizität einer Scheibe während des Ganges durch ein Keilschubgetriebe bekannt. Zur Verstellung muß das Keilstück mit den beiden Lagern axial verstellt werden. Beide Exzenter sind aber nicht für eine Hubverstellung während des Betriebes geeignet.

Ein weiterer Kokillenantrieb ist aus Stahlstrang-Gießanlagen G. Baumann, Verlag Stahl und Eisen mbH, Düsseldorf, 1976 und dort in den Bildern 177 und 178 bekannt. Hier wird das Heben und Senken des Hubtisches und damit der Kokille über einen gabelförmigen Schwinghebel, der mit einer schubstange verbunden ist, sowie zwei Lenker von einem mit einem Motor und Kegelstirnradgetrieben angetriebenen Kurbenscheibengetriebe bewirkt.

Nachteil der aus dieser Schrift bekannten Vorrichtung zur Erzeugung einer vertikalen Hubbewegung Liegt darin, daß zwischen der Einleitung und der Abgabe der Hubbewegung eine relativ große Anzahl von Elementen

2

EP 0 370 035 B1

liegt, deren Gesamtfehlerzahl zu einer Ungenauigkeit der gewünschten Hubbewegung führen.

Die Erfindung hat sich zum Ziel gesetzt, eine Vorrichtung zur Erzeugung einer vertikalen Hubbewegung gemäß Oberbegriff des Hauptanspruchs 1 zu schaffen, die eine einfache, verschleißnarme Bauweise aufweist, frei justierbar ist, zur exakteren Führung der Kokille beiträgt und dabei während des Betreibes eine präzise Hubverstellung ermöglicht.

Diese Aufgabe wird, ausgehend von einer Vorrichtung gemäß dem Oberbegriff des Anspruchs 1, erfindungsgemäß mit den im Kennzeichen des Patentanspruchs 1 angegebenen Merkmalen gelöst.

Die weitere Ausbildung des Erfindungsgegenstandes ergeht aus den Merkmalen der Unteransprüche hervor.

In vorteilhafter Weise sind bei der erfindungsgemäßen Vorrichtung nur wenige Elemente erforderlich. Die Verschleißpunkte sind definiert und durch die instandhaltungsfreundliche Ausgestaltung gut zu beherrschen. Einflüsse über Veränderungen, etwa Längenänderungen durch thermische Beeinflussung, sind vernachlässigbar, zum einen durch die geringe Bauhöhe der Einzelemente, zum anderen durch die geringe Anzahl und somit der geringen Fehlermöglichkeit.

Der Einsatz ausschließlich mechanischer und damit zum Vergleich ölhydraulischer Elemente nicht entzündbarer Bauteile ist dem Einsatzort angepaßt.

Der im wesentlichen senkrecht zur Hubbewegung angeordnete Drehteller ist um eine Drehachse kippbar. Die Kippbewegung des sich drehenden Tellers bewirkt die Amplitudenänderung des Hubes. Diese Kippbewegung ist durch einfache Elemente stufenlos und mit hoher Genauigkeit einstellbar. So ist bereits durch angemessene Länge des Verstellarmes eine ausreichende Untersetzung des Verstellweges vom Verstellantrieb zum Winkel der Drehtellerkippwaage möglich, die eine exakte Positionierung erlaubt. Ein üblicherweise aufwendiges Justieren vor Inbetriebnahme der Oszillationsvorrichtung entfällt, da die Hubeinstellung auch während des Betriebes vorgenommen werden kann.

Es besteht beim Einsatz der erfindungsgemäßen Hubvorrichtung die Möglichkeit, auf einfache Weise die Kokille in einer vorgegebenen Richtung, beispielsweise auf einer Kuvenbahn, schwingen zu lassen, da die einzelnen Drehteller unabhängig voneinander ansteuerbar sind. Dabei besteht auch noch die Möglichkeit, zwei in gleicher Amplitude schwingende Hubelemente relativ zueinander, beispielsweise beim Absenken eines Fundamentes, schwingen zu lassen.

Die Krafteinleitung der Hubbewegung erfolgt zentrisch in das die Stranggießkokille abstützende Element. Dadurch tritt ein Wegwandern der Kokille in horizontaler Richtung kaum auf und wenn, dann nur in sehr geringem Maße und nicht eine bestimmte Richtung bevorzugend. Die Folge davon ist, daß zur vertikalen Führung des Hubes nur einfache Elemente erforderlich sind. Eine Möglichkeit wären einfache Lenker. Eine sehr kompakte Lösung ist aber eine Vertikalführung durch Kolben in einem Zylinder. Dieser Zylinder eignet sich durch seine hohe Festigkeit und Steifheit gleichzeitig zur Aufnahme der Kippvorrichtung des Drehtellers und zur Übertragung der Kräfte auf das Fundament. Durch diese Anordnung werden die sonst üblichen Zuganker und/oder Führungsböcke vermieden.

Insgesamt sind die Gewichte der erfinderischen Oszillationsvorrichtung so gering, daß ein negativer Einfluß auf das Schwingverhalten der Kokille nicht zu erwarten ist.

Bei der Übertragung der Hubenergie wird die Hebelkraft axial in den Stab eingeleitet, der sich über Kugelköpfe auf dem Teller und auf dem Kokillentragelement abstützt. Falls ein möglicher, wenn auch geringer Verschleiß in der Lagerung auftritt, so wirkt dieser in Richtung der Achse des Stabes, wobei eine Wegänderung durch Verkippen des Drehtellers leicht wieder ausgeglichen werden kann. Die sonst übliche Lochleibung beim System Welle und Lager mit der fehlenden Möglichkeit einer Korrektur tritt bei erfindungsgemäßer Anordnung nicht auf.

Da zu der erfindungsgemäßen Hubvorrichtung zum Antrieb des Drehtellers und der Verstelleinrichtung sehr einfache Elemente, Stange und Welle, erforderlich sind, können diese Antriebe in ausreichender Entfernung von der Kokille installiert werden, so daß ausreichend Platz im Bereich der Kokille für andere Elemente oder Tätigkeiten verbleibt.

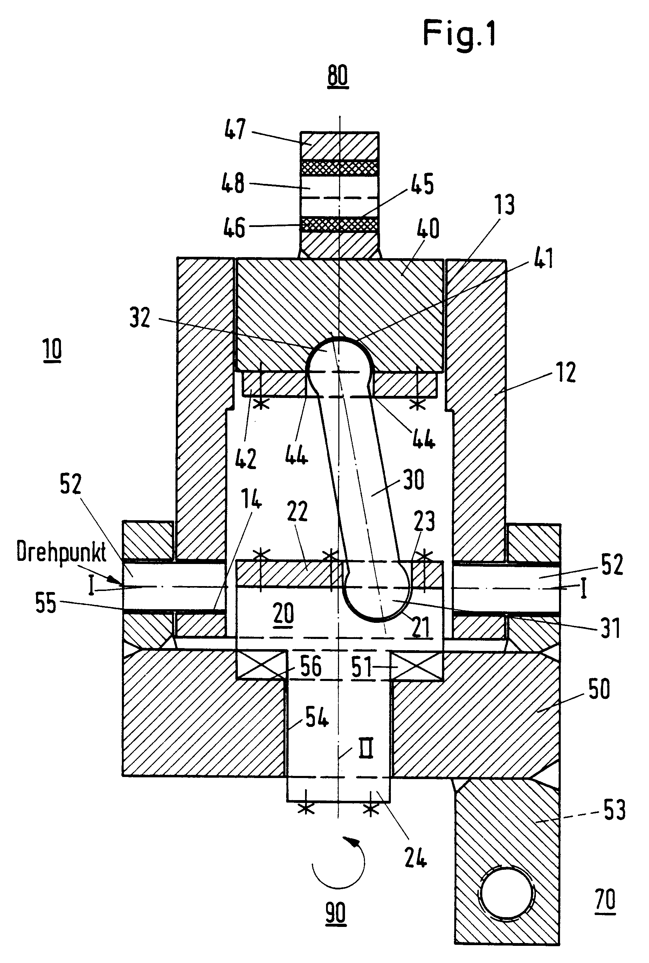

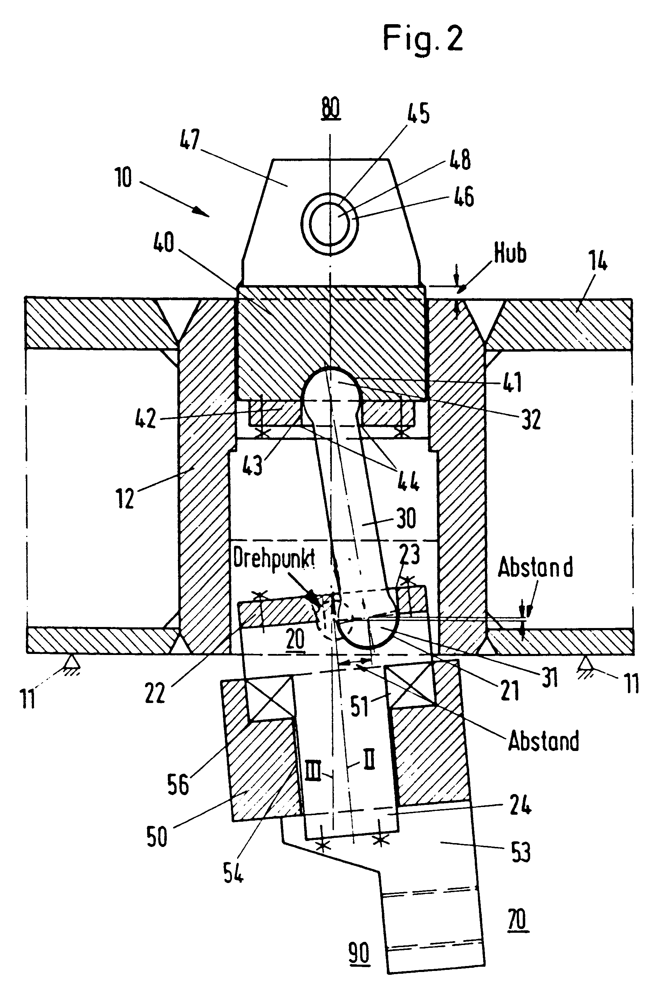

Ein Beispiel der Erfindung ist in den folgenden Zeichnungen dargelegt. Die Figur 1 zeigt einen Aufriß der Vorrichtung zur Erzeugung einer vertikalen Hubbewegung und die Figur 2 eine im Vergleich zur Figur 1 um 90 Grad gedrehte Ansicht.

In den Figuren 1 und 2 ist ein Antriebselement 10 dargestellt. An einer Hülse 12 ist eine um die Längsachse I in der Neigung verstellbarer Topf 50 drehbar gelagert. In dem Topf 50 ist ein Drehteller 20 angeordnet, der über einen Stab 30 mit einem ebenfalls in der Hülse 12 geführten kolbenförmigen Element 40 kraftmäßig in Verbindung steht. Die Zuordnung einer Verstelleinrichtung 70, einer Kokille 80 und einer Antriebseinheit 90 zum Antriebselement 10 ist in den Figuren lediglich durch deren Bezugzeichen angedeutet. Mit I ist die Schwenkachse des Topfes 50 und mit II die Drehachse des Drehtellers 20 bezeichnet.

Zwischen der Hülse 12 und dem kolbenförmigen Element 40 sind Elemente 13 vorgesehen. In der Hülse 12 sind Bohrungen 14 koaxial zur Schwenkachse I vorgesehen, durch die Wellen 52 geführt sind, die ande-

3

renends in eine Bohrung 55 des schwenkbaren Topfes 50 ragen. Auf dem Innenboden 56 des Topfes 50 ist ein Drucklager 51 vorgesehen. Im Zentrum des Topfes 50 ist eine Bohrung 54 zur Durchführung der Welle 24 des Drehtellers 20 eingebracht. Der Topf 50 ist mittels der Verstelleinrichtung 70 um die Achse I schwenkbar.

Auf dem Drucklager 51 stützt sich der Drehteller 20 ab. Im Drehteller 20 und im kolbenförmigen Element 40 sind kugelschalenförmige Lagerungen 21 bzw. 41 vorgesehen, in denen das jeweils mit Kugelkopf ausgebildete kolbenseitige und tellerseitige Ende 31 bzw. 32 des Stabes 30 gelagert ist. Aus Montagegründen sind die lager der Stabenden 31, 32 mittels Scheiben 22 bzw. 42 teilbar ausgeführt. Die Scheiben weisen jeweils eine Ringfläche 23 bzw. 44 in Öffnungen 25 bzw. 43 auf. Durch diese Ringflächen 23 bzw. 44 besteht die Möglichkeit, den Kugelkopf 31 bzw. 32 vorzuspannen.

Das kolbenförmige Element 40 weist auf der der Kokille 80 zugewandten Seite als Befestigungsmittel eine Anschlußlasche 47 mit einem Auge 48 auf, in dem mindestens auf der Stützfläche 45 Dämpfungsmittel 46 vorgesehen sind, die Stöße zwischen der Kokille 80 und den Antriebselementen 10 mildern.

In Figur 2 sind dieselben Bezugszeichen verwendet worden wie in Figur 1; darüber hinaus ist noch ein Fundament 11 für einen Tragrahmen 14 der Antriebsvorrichtungen 10 dargestellt.

Die Anzahl der in den Tragrahmen 14 angeordneten Antriebsvorrichtungen 10 richtet sich nach den jeweiligen Erfordernissen. Im allgemeinen werden vier Antriebsvorrichtungen vorgesehen. Bei sogenannten Mini-Kokillen kann eine einzige Antriebsvorrichtung 10 als ausreichend angesehen werden.

## Patentansprüche

1. Vorrichtung zur Erzeugung einer vertikalen Hubbewegung bei Stranggießkokillen für Metall, insbesondere Stahl, bestehend aus mindestens einem in seiner Hubhöhe verstellbare Schwingung erzeugenden mechanischen Antriebselement, das, sich auf einem Fundament abstützen, mit einer Stranggießkokille in Verbindung steht,
**dadurch gekennzeichnet,**
daß des Antriebselement (10) einen zu seiner Längsachse (III) geneigten, um eine senkrecht zur Längs (III) angeordnete Schwenkachse (I) in der Neigung zur Horizontalen verstellbaren Drehteller (20) aufweist, der in einem Topf (50) gelagert ist, durch eine Welle (24) antreibbar ist und an dessen in Hubrichtung zur Stranggießkokille (80) weisenden Seite (21) außerhalb seiner Drehachse (II) zur Aufnahme eines Stabes (30) das eine Ende (31) des Stabes (30) gelagert ist, dessen anderes Ende (32) in einem, die Stranggießkokille (80) abstützenden, in Hubrichtung vertikal geführten Element (40) gelagert ist.

2. Vorrichtung zur Erzeugung einer vertikalen Hubbewegung nach Anspruch 1,
**dadurch gekennzeichnet,**
daß das Element (40) ein Kolben ist, der in einer mit dem Fundament (11) verbundene Hülse (12) führbar ist.

3. Vorrichtung zur Erzeugung einer vertikalen Hubbewegung nach Anspruch 2,
**dadurch gekennzeichnet,**
daß zwischen dem kolbenförmigen Element (40) und der Hülse (12) Elemente (13) zum verschleißfreien Gleiten vorgeschen sind.

4. Vorrichtung zur Erzeugung einer vertikalen Hubbewegung nach Anspruch 2,
**dadurch gekennzeichnet,**
daß an dem Element (40) auf der der Kokille zugewandten Seite Befestigungsmittel (47) vorgesehen sind.

5. Vorrichtung zur Erzeugung einer vertikalen Hubbewegung nach Anspruch 4 oder 2,
**dadurch gekennzeichnet,**
daß zwischen dem Befestigungsmittel (47) und der Kokille (80) Mittel (46) aus stoßdämpfendem Material vorgesehen sind.

6. Vorrichtung zur Erzeugung einer vertikalen Hubbewegung nach Anspruch 1,
**dadurch gekennzeichnet,**
daß die Lagerungen (21, 41) kugelförmig ausgestaltet sind.

7. Vorrichtung zur Erzeugung einer vertikalen Hubbewegung nach Anspruch 6,
**dadurch gekennzeichnet,**
daß an dem Drehteller (20) und dem Element (40) jeweils auf der dem Stab (30) zugewandtem Seite lösbare Scheiben (22, 42) vorgesehen sind, in deren Zentren eine Öffnung eingelassen ist, die stabseitig eine Ringfläche (23, 44) mit kugelförmiger Kontur aufweisen.

8. Vorrichtung zur Erzeugung einer vertikalen Hubbewegung nach Anspruch 7,
**dadurch gekennzeichnet,**
daß die lösbaren Scheiben (22) am Drehteller (20) und die lösbaren Scheiben (42) an dem Element (40) derart befestigt sind, daß die Ebenen der dem Stab zugewandten Seite durch den Mittelpunkt des kugelförmigen Lagers (21, 41) geführt sind.

9. Vorrichtung zur Erzeugung einer vertikalen Hubbewegung nach einem der o. g. Ansprüche,
**dadurch gekennzeichnet,**
daß an dem Drehteller (20) ein Lager (51) senkrecht zur Hubrichtung angeordnet ist, das sich in einem Topf (50) abstützt.

10. Vorrichtung zur Erzeugung einer vertikalen Hubbewegung nach Anspruch 9,
**dadurch gekennzeichnet,**
daß am Topf (50) eine Welle (52) koaxial zur Drehachse (II) angeordnet ist.

11. Vorrichtung zur Erzeugung einer vertikalen Hubbewegung nach Anspruch 10,
**dadurch gekennzeichnet,**
daß die Welle (52) in Öffnungen der Führungshülse (12) drehbar gelagert ist.

12. Vorrichtung zur Erzeugung einer vertikalen Hubbewegung nach Anspruch 9,
**dadurch gekennzeichnet,**
daß an den Topf (50) senkrecht zur Drehachse (II) ein Verstellarm (53) angeordnet ist.

13. Vorrichtung zur Erzeugung einer vertikalen Hubbewegung nach Anspruch 12,
**dadurch gekennzeichnet,**
daß der Verstellarm (53) mit einer Verstelleinrichtung (70) verbunden ist.

14. Vorrichtung zur Erzeugung einer vertikalen Hubbewegung nach Anspruch 9,
**dadurch gekennzeichnet,**
daß an dem Drehteller (20) zentrisch auf der dem Lager (21) gegenüberliegende Seite eine Welle (24) vorgesehen ist, die durch eine Bohrung (54) durch den Topf (50) geführt ist.

15. Vorrichtung zur Erzeugung einer vertikalen Hubbewegung nach Anspruch 14,
**dadurch gekennzeichnet,**
daß die Welle (24) mit einer Antriebseinheit (90) verbunden ist.

## Claims

1. A device for producing a vertical lifting movement in continuous casting moulds for metal, in particular steel, consisting of at least one oscillation-producing mechanical drive element which is adjustable in lifting height, which element, supported on a base, is connected to a continuous casting mould,
characterised in that
the drive element (10) has a rotary plate (20) which is inclined with respect to its longitudinal axis (III) and which is adjustable in inclination to the horizontal about a pivot axis (I) arranged perpendicular to the longitudinal axis (III), which plate is mounted in a receptacle (50), can be driven by a shaft (24) and for receiving a rod (30) one end (31) of the rod (30) is mounted on the side (21) of said plate which points in the direction of lift to the continuous casting mould (80), outside its axis of rotation (II), the other end (32) of said rod being mounted in an element (40) which supports the continuous casting mould (80) and which is guided vertically in the direction of lift.

2. A device for producing a vertical lifting movement according to Claim 1,
characterised in that
the element (40) is a piston which can be guided in a sleeve (12) connected to the base (11).

3. A device for producing a vertical lifting movement according to Claim 2,
characterised in that
elements (13) for wear-free sliding are provided between the piston-shaped element (40) and the sleeve (12).

4. A device for producing a vertical lifting movement according to Claim 2,
characterised in that
attachment means (47) are provided on the element (40) on the side facing the mould.

5. A device for producing a vertical lifting movement according to Claim 4 or 2,
characterised in that
means (46) made of shock-absorbing material are provided between the attachment means (47) and the mould (80).

6. A device for producing a vertical lifting movement according to Claim 1,
characterised in that
the bearings (21, 41) are spherical in shape.

7. A device for producing a vertical lifting movement according to Claim 6,
characterised in that
detachable discs (22, 42) are provided on the rotary plate (20) and the element (40) in each case on the side facing the rod (30), in the centres of which discs an opening is made which has on the rod side an annular surface (23, 44) with a spherical contour.

8. A device for producing a vertical lifting movement according to Claim 7, characterised in that the detachable discs (22) are attached to the rotary plate (20) and the detachable discs (42) are attached to the element (40) in such a manner that the planes of the side facing the rod pass through the centre point of the spherical bearing (21, 41).

9. A device for producing a vertical lifting movement according to one of the above Claims, characterised in that a bearing (51) is arranged on the rotary plate (20) perpendicular to the direction of lift, which bearing is supported in a receptacle (50).

10. A device for producing a vertical lifting movement according to Claim 9, characterised in that a shaft (52) is arranged on the receptacle (50) coaxially to the axis of rotation (II).

11. A device for producing a vertical lifting movement according to Claim 10, characterised in that the shaft (52) is rotatably mounted in openings in the guide sleeve (12).

12. A device for producing a vertical lifting movement according to Claim 9, characterised in that an adjustment arm (53) is arranged on the receptacle (50) perpendicular to the axis of rotation (II).

13. A device for producing a vertical lifting movement according to Claim 12, characterised in that the adjustment arm (53) is connected to an adjustment device (70).

14. A device for producing a vertical lifting movement according to Claim 9, characterised in that a shaft (24) is provided on the rotary plate (20) centrally on the side opposite the bearing (21), which shaft passes through the receptacle (50) in a bore (54).

15. A device for producing a vertical lifting movement according to Claim 14, characterised in that the shaft (24) is connected to a drive unit (90).


**Revendications**

1. Dispositif pour produire un mouvement vertical dans des coquilles de coulée continue pour du métal, en particulier de l'acier, comportant au moins un élément d'entraînement mécanique produisant une oscillation de course réglable, qui, s'appuyant sur une embase, est relié à une coquille de coulée continue, caractérisé en ce que l'élément d'entraînement (10) présente un plateau tournant (20) incliné par rapport à son axe longitudinal (III) et dont l'inclinaison par rapport à l'horizontale peut être réglée autour d'un axe de pivotement (I) agencé perpendiculairement à l'axe longitudinal (III), plateau qui est monté dans un palier (50) et peut être entraîné par un arbre (24), et sur le côté (21), orienté dans la direction de déplacement vers la coquille de coulée continue (80), de celui-ci, pour la réception d'une barre (30), est montée, en dehors de son axe de rotation (II), une extrémité (31) de la barre (30), dont l'autre extrémité (32) est montée dans un élément (40) guidé verticalement dans la direction de déplacement et supportant la coquille de coulée continue (80).

2. Dispositif pour produire un mouvement vertical selon la revendication 1, caractérisé en ce que l'élément (40) est un piston qui peut être guidé dans une douille (12) reliée à l'embase (11).

3. Dispositif pour produire un mouvement vertical selon la revendication 2, caractérisé en ce que, entre l'élément en forme de piston (40) et la douille (12), sont prévus des éléments (13) pour un coulissement sans usure.

4. Dispositif pour produire un mouvement vertical selon la revendication 2, caractérisé en ce que, sur l'élément (40) sur le côté proche de la coquille, sont prévus des moyens de fixation (47).

5. Dispositif pour produire un mouvement vertical selon la revendication 4 ou 2, caractérisé en ce que, entre les moyens de fixation (47) et la coquille (80), sont prévus des moyens (46) en un matériau amortissant les chocs.

6. Dispositif pour produire un mouvement vertical selon la revendication 1,
caractérisé en ce que
les logements (21, 41) présentent une forme sphérique.

7. Dispositif pour produire un mouvement vertical selon la revendication 6,
caractérisé en ce que,
sur le plateau tournant (20) et l'élément (40), sont prévus, à chaque fois, des disques amovibles (22, 42), sur le côté proche de la barre (30), dans les centres desquels est ménagée une ouverture, qui présente, du côté de la barre, une surface annulaire ( 23, 44) à contour sphérique.

8. Dispositif pour produire un mouvement vertical selon la revendication 7,
caractérisé en ce que
le disque amovible (22) sur le plateau tournant (20) et le disque amovible (42) sur l'élément (40) sont fixés de sorte que leurs plans du côté proche de la barre passent par le centre des logements sphériques (21, 41).

9. Dispositif pour produire un mouvement vertical selon une des revendications précédentes,
caractérisé en ce qu'une
butée (51) est agencée sur le plateau tournant (20) perpendiculairement à la direction de déplacement, butée qui s'appuie dans un palier (50).

10. Dispositif pour produire un mouvement vertical selon la revendication 9,
caractérisé en ce que,
dans le palier (50), est agencé un arbre (52) coaxialement à l'axe de rotation (II).

11. Dispositif pour produire un mouvement vertical selon la revendication 10,
caractérisé en ce que
l'arbre (52) est monté rotatif dans des ouvertures de la douille de guidage (12).

12. Dispositif pour produire un mouvement verticalselon la revendication 9,
caractérisé en ce qu'un
bras de réglage (53) est agencé sur le palier (50) perpendiculairement à l'axe de rotation (II).

13. Dispositif pour produire un mouvement vertical sel on la revendication 12,
caractérisé en ce que
le bras de réglage (53) est relié à un dispositif de réglage (70).

14. Dispositif pour produire un mouvement vertical selon la revendication 9,
caractérisé en ce que,
sur le plateau (20), est prévu un arbre (24), de façon centrale sur le côté opposé au logement (21), arbre qui est guidé à travers un alésage (54) du palier (50).

15. Dispositif pour produire un mouvement vertical selon la revendication 14,
caractérisé en ce que
l'arbre (24) est relié à une unité d'entraînement (90).

# Fig.1

# Fig. 2